# EUROPÄISCHE PATENTSCHRIFT

(11) **EP 1 245 021 B1**
(45) Veröffentlichungstag und Bekanntmachung des Hinweises auf die Patenterteilung: **27.08.2003**
(21) Anmeldenummer: 00941939.1
(22) Anmeldetag: 31.05.2000
(51) Int. Cl.: G09F 27/00

(54) **VERFAHREN ZUR ÜBERTRAGUNG VON STANDORTSPEZIFISCHEN INFORMATIONEN**
METHOD FOR TRANSMITTING LOCATION-SPECIFIC INFORMATION
PROCEDE DE TRANSMISSION D'INFORMATIONS SPECIFIQUES D'EMPLACEMENTS

(30) Priorität: 28.10.1999 DE 19952001
(43) Veröffentlichungstag der Anmeldung: 02.10.2002
(73) Patentinhaber: SIEMENS AKTIENGESELLSCHAFT, 80333 München (DE)
(72) Erfinder: PETER, Martin, D-80333 München (DE); SIEWERTH, Jörg, D-85662 Hohenbrunn (DE)
(86) Internationale Anmeldenummer: DE0001793
(87) Internationale Veröffentlichungsnummer: WO01031619

(56) Entgegenhaltungen:
- EP-A- 0 021 060
- DE-A- 4 033 054
- FR-A- 2 596 902
- FR-A- 2 719 931
- US-A- 5 264 822
- US-A- 5 877 698

## Beschreibung

Die Erfindung betrifft ein Verfahren zur Übertragung von standortspezifischen Informationen, ein Content-Geber, eine Empfangseinheit, und ein Informationsübertragungssystem, die aus FR-A-2 719 931 bekannt sind.

Bisher werden lokale, d. h. vom Ort abhängige bzw. für den jeweiligen Standort spezifische Informationen weitgehend über die sogenannten klassischen Medien kommuniziert. Hierzu gehören beispielsweise Plakate, Schaufenster, Aktionen vor Geschäften oder, für ein größeres Verbreitungsgebiet, Werbung im Radio, im Fernsehen sowie Anzeigen in Zeitungen und Zeitschriften. Für die Verbreitung von solchen ortsspezifischen Informationen über neuere Medien, wie z. B. das Internet, gibt es erste Ansätze zum Aufbau von großen überregionalen Datenbanken. In diesen werden ortsabhängige, von sogenannten Content-Anbietern zur Verfügung gestellte Informationen entsprechend ihrer Inhalte und ihrer räumlichen Abhängigkeiten katalogisiert und gespeichert und den Kunden zur Verfügung gestellt. Der Aufwand für den Unterhalt und die Pflege für solche zentralen Datenbanken ist jedoch sehr hoch. Zudem besitzen zahlreiche von den einzelnen Content-Anbietern zur Verfügung gestellte Informationen nur in einem sehr engen Umkreis um die jeweilige Quelle der Information eine Relevanz, wie dies z. B. bei Preisen, insbesondere Sonderangeboten eines Supermarkts oder einer Tageskarte eines Restaurants, der Fall ist.

Es ist Aufgabe der vorliegenden Erfindung, eine einfache und kostengünstige Alternative zu diesem Stand der Technik zu schaffen.

Die Aufgabe wird durch ein Verfahren gemäß Anpruch 1, ein Content-Geber gemäß Anspruch 8, eine Empfangseinheit gemäß Anspruch 12, und ein Informationsübertragungssystem gemäß Anspruch 16 gelöst.

Beim Verfahren werden an unterschiedlichen Standorten jeweils ein Content-Geber positioniert, und in einen Content-Speicher jedes Content-Gebers für diesen Standort spezifische Informationen eingespeichert. Jeder Content-Geber sendet diese standortspezifischen Informationen in einem räumlich eng begrenzten Sendebereich aus. Eine mobile Empfangseinheit empfängt bei Eintritt in den Sendebereich eines Content-Gebers automatisch die standortspezifischen Informationen und verarbeitet sie weiter bzw. bringt sie zur Anzeige.

Unter dem Begriff "Content-Geber" ist hierbei eine Einheit zur Generierung und/oder Speicherung und zur selbständigen Übertragung der jeweiligen Informationsinhalte zu verstehen. Die Content-Geber können von den jeweiligen Content-Anbietern an einer beliebigen, gewünschten Position installiert werden. Sie versenden die Informationen je nach Wahl der Sendebereiche in der Regel im Bereich von einigen Metern, bei Auswahl eines leistungsfähigeren Senders maximal im Bereich von ca. 100 Metern um den Standort herum. Sobald eine Person mit einer entsprechenden Empfangseinheit den Sendebereich des jeweiligen Content-Gebers betritt, wird die Information von der Ausgabeeinheit empfangen und weiterverarbeitet und ggf. ausgegeben.

Bei diesem erfindungsgemäßen dezentralen System zur selbständigen Übertragung von ortsspezifischen Inhalten der verschiedenen Content-Geber werden keinerlei zentrale Informationsstellen oder Datenbanken mehr für die Verwaltung der unterschiedlichen Inhalte benötigt. Die ortsspezifischen Informationen werden von den jeweiligen Content-Gebern dort verwaltet, wo sie erzeugt und auch benötigt werden. Eine weiterführende Verarbeitung, insbesondere Sortierung nach dem Ort, ist nicht mehr erforderlich.

Aufgrund der Flexibilität des Systems sind die verschiedensten Einsatzmöglichkeiten gegeben.

Mögliche Einsatzorte befinden sich beispielsweise in oder vor Restaurants zur Übermittlung der Speisekarte an die eintretenden Gäste oder auch an vorbeilaufende oder vorbeifahrende Passanten. Ebenso können derartige Content-Geber bei Supermärkten oder anderen Geschäften aufgestellt werden, um auf das Angebot dieser Geschäfte, insbesondere Sonderangebote, hinzuweisen. Des weiteren können solche Geräte an Plakatwänden angebracht werden um dem Betrachter zusätzliche Informationen zum jeweiligen Plakat zu liefern. Weitere Anwendungsbeispiele sind Sehenswürdigkeiten, an denen die Content-Geber jeweils Informationen über die Sehenswürdigkeit übermitteln, aktuelle Ansagen in Bahnhöfen oder Flughäfen etc. Ein anderer Einsatzbereich ist z. B. die Verwendung an Verkehrszeichen, insbesondere zur Übermittlung von zusätzlichen Warnhinweisen an entsprechende Empfangseinheiten in Fahrzeugen. Ebenso ist es möglich, auf diese Weise Blinde bzw. Sehbehinderte auf ihren Wegen zu unterstützen, sofern eine entsprechende akustische Ausgabe an der Empfangseinheit erfolgt.

Bei einem bevorzugten Ausführungsbeispiel senden die Content-Geber zunächst ein Bereitschaftssignal aus. Dieses Bereitschaftssignal wird von der Empfangseinheit bei Eintritt in den Sendebereich des Content-Gebers empfangen, worauf die Empfangseinheit ein Abfragesignal aussendet. Erst nach Empfang dieses Abfragesignals sendet der Content-Geber wiederum die Informationen an die Empfangseinheit.

Diese Ausführungsform ermöglicht es insbesondere, daß die Empfangseinheit zur Abfrage der Informationen ein Berechtigungssignal aussendet und daß dieses Berechtigungssignal vor Aussenden der Informationen vom Content-Geber geprüft wird. Auf diese Weise kann beispielsweise sichergestellt werden, daß nur autorisierte Nutzer die Informationen erhalten. Eine Berechtigung zum Empfang der Information kann beispielsweise an die Zahlung einer Gebühr für die Nutzung des Systems gekoppelt sein. Ebenso kann eine Berechtigung von anderen Bedingungen abhängig gemacht werden. Beispielsweise kann das System so eingestellt sein, daß Jugendliche keinerlei Informationen über Alkohol oder Tabak erhalten.

Weiterhin besteht die Möglichkeit, daß die Informationen vom Content-Geber kodiert ausgesendet werden und von der Empfangseinheit mittels eines entsprechenden Schlüssels dekodiert werden, wobei der Besitz eines entsprechenden Schlüssels wiederum von der Bezahlung einer Gebühr abhängig gemacht werden kann.

Weiterhin ist es besonders vorteilhaft, wenn die vom Content-Geber ausgegebenen Informationen vor einer Ausgabe bzw. Anzeige durch die Empfangseinheit gefiltert werden.

Dies kann unter anderem auf folgenden zwei verschiedenen Wegen geschehen:

Bei einem ersten Ausführungsbeispiel sendet die Empfangseinheit ein Abfragesignal aus, mit dem nur spezielle Informationsinhalte abgefragt werden. Hierzu ist es insbesondere möglich, daß der Content-Geber beispielsweise gemeinsam mit dem Bereitschaftssignal ein Inhaltsverzeichnis über die zur Verfügung stehenden standortspezifischen Informationen aussendet, so daß die Empfangseinheit nur bei entsprechender Übereinstimmung der gewählten Informationen mit den angebotenen Informationen überhaupt ein Abfragesignal aussendet.

Diese bidirektionale Kommunikation zwischen Content-Geber und Empfangseinheit kann auch dahingehend erweitert werden, daß der Content-Geber Zusatzinformationen anbietet und der Benutzer über die Empfangseinheit, oder die Empfangseinheit selbständig nach entsprechender Voreinstellung, diese Zusatzinformationen abfragt. Weiterhin kann der Content-Geber, sofern er an entsprechende Zusatzgeräte, beispielsweise ein Rechner- oder Kassensystem einer Verkaufsstelle oder eines Restaurationsbetriebs, angeschlossen ist, ein Bestellsignal der Empfangseinheit entgegennehmen und weiterleiten. Auf diese Weise kann der Empfänger einer Information über ein Warenangebot die Ware auf Wunsch sofort ordern bzw. reservieren.

Bei einer anderen Ausführungsform weist die Empfangseinheit selbst eine Filtereinrichtung auf, so daß die Empfangseinheit sämtliche standortspezifischen Informationen empfangen kann und dann in Abhängigkeit von den durch einen Benutzer in der Empfangseinheit eingespeicherten Vorgaben filtert.

Die Empfangseinheit weist sinnvollerweise eine entsprechende Eingabeeinrichtung auf, mit der z. B. Filterdaten eingegeben werden können, anhand derer die standortspezifischen Informationen in der Empfangseinheit selbst gefiltert werden, bzw. ein entsprechendes selektives Abfragesignal zur Aussendung an den Content-Geber erzeugt wird. Bei dieser Eingabeeinrichtung kann es sich beispielsweise um eine Tastatur und ein Display handeln, wobei die Filtereinrichtung oder die Einrichtung zur Generierung des Abfragesignals über die übliche Menüführung programmiert wird. Selbstverständlich kann es sich hierbei auch um eine Spracheingabe handeln.

Da der Nutzer die gewünschte Art der Information einstellen kann, ist sichergestellt, daß dem Benutzer keinerlei interessanten Angebote entgehen, er andererseits aber auch nicht durch unnötige Angebote belästigt wird. So kann der Benutzer, wenn er beispielsweise auf der Suche nach einer bestimmten Ware oder nach einem bestimmten Restaurant, einem Biergarten oder dergleichen ist, diesen Wunsch in seinem Gerät so einstellen, daß er automatisch vom Gerät auf entsprechende Angebote aufmerksam gemacht wird, sobald er einen Standort passiert, an dem dieses Angebot erhältlich ist.

Sowohl der Content-Geber als auch die Empfangseinrichtung weisen vorzugsweise eine netzunabhängige Spannungsversorgung auf.

Bei den Empfangseinrichtungen, bei denen es sich um mobile Geräte handelt, ist dies an sich selbstverständlich. Hier wird die Versorgung in der Regel durch Batterien, Akkus oder ggf. Solarzellen sichergestellt. Bei Einbau in ein Fahrzeug kann auch ein Anschluß an das Fahrzeugnetz, d. h. an die Fahrzeugbatterie bzw. Lichtmaschine, erfolgen.

Die Content-Geber können dagegen im Prinzip als standortfeste Geräte auch an eine Netzspannung angeschlossen sein. Dies bietet sich insbesondere bei der Verwendung solcher Geräte in Geschäften, Restaurants oder dergleichen an. Bei der Verwendung solcher Content-Geber an Standorten, wo nicht ohne weiteres ein Netzanschluß zur Verfügung steht, beispielsweise an Plakatwänden, Verkehrsschildern oder dergleichen, ist eine autarke Versorgung unter Verwendung von Solarzellen und Akkumulatoren sinnvoll.

Der Content-Speicher sollte hierbei vorteilhafterweise ein nichtflüchtiger Speicher sein, um zu verhindern, daß beim kurzzeitigen Ausfall der Spannungsversorgung die Informationen gelöscht werden.

Als Empfangseinheit kann vorzugsweise ein übliches mobiles Endgerät, beispielsweise ein Mobiltelefon oder ein PDA verwendet werden, was mit einer entsprechenden Vorrichtung zum Empfang, beispielsweise eine kurzreichweitige Funkschnittstelle, und mit Einrichtungen zur Verarbeitung sowie zur Ausgabe der Informationen ausgerüstet ist. Bei entsprechend komprimierter Technik kann es sich bei dem mobilen Endgerät auch um eine Uhr handeln.

Als kurzreichweitige Funkschnittstelle bietet sich auf seiten der Empfangseinheit und auch auf seiten des Content-Gebers ein sogenanntes "bluetooth"-Modell an, welches in der Lage ist, bidirektional über einen 2,4-Gigahertz-Kanal zu kommunizieren. Bei dieser bidirektionalen Schnittstelle handelt es sich folglich um eine Sende-/Empfangseinheit, über die die ortsspezifischen Informationen sowie sämtliche für die Kommunikation notwendigen Signale wie beispielsweise ein Bereitschaftssignal, das Inhaltsverzeichnis, ein Berechtigungssignal, ein selektives Abfragesignal usw. empfangen bzw. gesendet werden können. Je nach Modultyp liegt die Reichweite im Bereich von ca. 10 Metern oder im Bereich von maximal 100 Metern.

Selbstverständlich kann es sich aber auch um andere kurzreichweitige Schnittstellen wie beispielsweise Infrarot-Schnittstellen handeln. Diese Schnittstellen haben jedoch den Nachteil, daß durch den Benutzer eine Ausrichtung dieser Schnittstellen aufeinander erfolgen muß. Dies bedeutet, daß der Benutzer zunächst selbst erkennen muß, wo ein entsprechender Sender steht, und daß er daraufhin gezielt seinen Empfänger zur Übernahme der Informationen ausrichtet.

Weiterhin ist es vorteilhaft, wenn die Empfangseinheit beim Eindringen in den Sendebereich eines Content-Gebers mit den gewünschten Informationen dies durch ein akustisches oder optisches Signal, ein Vibrationssignal oder ähnliches anzeigt.

Die Erfindung wird im folgenden unter Hinweis auf die beigefügten Zeichnungen anhand von Ausführungsbeispielen näher erläutert. Die dargestellten Merkmale können nicht nur in den genannten Kombinationen, sondern auch einzeln oder in anderen Kombinationen erfindungswesentlich sein. Es zeigen:
Figur 1 eine schematische Darstellung einer Empfangseinheit, welche sich durch die Sendebereiche mehrerer aneinandergrenzender Content-Geber bewegt,
Figur 2 eine schematische Darstellung eines Content-Gebers und einer Empfangseinheit.

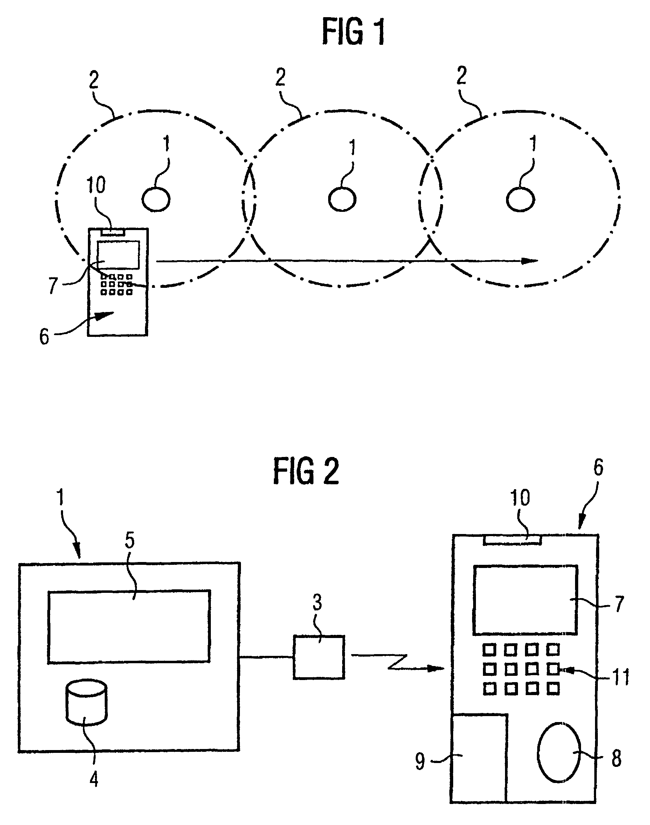

Gemäß dem in Figur 1 dargestellten Prinzip werden an verschiedenen Standorten Content-Geber 1 positioniert, welche unterschiedliche Informationsinhalte aussenden, die für den jeweiligen Standort spezifisch sind. Diese Content-Geber 1 senden mittels einer entsprechenden Funkschnittstelle 3, beispielsweise einem "bluetooth"-Modul, ihre Informationen innerhalb eines engbegrenzten Sendebereichs 2 aus.

Ein Kunde bzw. Benutzer des Systems führt eine Empfangseinheit 6 mit sich, welche mit einem entsprechenden kurzreichweitigen Modul 10 ausgerüstet ist. Sobald die Empfangseinheit 6 in den Sendebereich 2 eines Content-Gebers 1 eindringt, kann es die vom jeweiligen Content-Geber 1 ausgesendeten Informationen empfangen und auf der Anzeige 7 ausgeben.

Wie in Figur 2 vereinfacht dargestellt ist, handelt es sich bei dem Content-Geber gemäß dem vorliegenden Ausführungsbeispiel um eine Einheit zur Generierung von Informationen mittels einer Eingabevorrichtung 5 und zur Speicherung der Informationen in einem Content-Speicher 4. Die dort abgespeicherten Daten werden über eine Funkschnittstelle 3 von dem Content-Geber 1 selbständig ausgesendet. Zum Einspeichern der Informationsinhalte in den Speicher 4 kann der Content-Geber 1 anstelle der Eingabeeinheit 5 auch eine Schnittstelle aufweisen, über die beispielsweise mittels eines PC's entsprechende Informationen übertragen werden.

Wie in Figur 2 ebenfalls zu ersehen ist, ist es nicht unbedingt notwendig, daß die Funkschnittstelle 3 und die restlichen Bestandteile des Content-Gebers 1 baulich in einer Einheit zusammenhängen. So können beispielsweise die Eingabeeinheit 5 bzw. die Schnittstelle zur Übertragung der Daten in den Content-Speicher 4, der Content-Speicher und evtl. weitere Komponenten, innerhalb eines Rechnersystems oder als selbständiger PC, als elektronische Kasse oder dergleichen aufgebaut sein. Über eine Datenleitung ist dieser Teil mit der Funkschnittstelle 3 verbunden, die sich beispielsweise außerhalb des Gebäudes befindet.

Ein Anwendungsbeispiel ist ein Rechnersystem innerhalb eines Kaufhauses mit elektronischen Kassen, bei dem im Content-Speicher 1 die Preise für die einzelnen Waren gespeichert sind und jederzeit aktualisiert werden. Diese Preise werden über die Schnittstelle 3 ausgesendet. Der Benutzer einer Empfangseinheit 6 kann wiederum über die Eingabeeinheit 11 in Verbindung mit dem Display 7 in seiner Filtereinrichtung 9 ein spezielles Abfrageprofil einstellen, wonach er eine bestimmte Ware unterhalb eines bestimmten Preises sucht. Kommt nun dieser Benutzer mit seiner Eingabeeinheit 6 in den Sendebereich 2 des Content-Gebers 1 des genannten Supermarkts, so werden sämtliche übertragenen Preisinformationen daraufhin überprüft, ob die jeweilige Ware unter dem genannten Preis hier erhältlich ist. Wenn dies der Fall ist, wird über die akustische Ausgabeeinrichtung 8 ein Signal ausgegeben und auf der Anzeige 7 die Information in Form eines Textes dargestellt.

Da bei dem genannten System sämtliche Informationen nur dort gespeichert und verwaltet werden, wo sie erstellt und benötigt werden, ist das gesamte Übertragungssystem relativ kostengünstig und wartungsarm. Der jeweilige Content-Anbieter muß lediglich für eine Aktualisierung der von ihm angebotenen Informationen sorgen. Die Ausgabe erfolgt selbständig. Auf der anderen Seite kann der Empfänger der Informationen genau auswählen, welche Informationen er jeweils haben möchte, so daß er auf alle ihn interessierenden Gegebenheiten aufmerksam gemacht wird und gleichzeitig von Informationen, die für ihn uninteressant sind, verschont bleibt. Insoweit ist das gesamte System auch erheblich effektiver als die alleinige Verwendung der bisher bekannten klassischen Werbemedien wie Plakate oder Schaufenster, bei denen mit viel Aufwand eine möglichst große Aufmerksamkeit bei einem breiten Publikum erzielt werden muß, um eine möglichst große Abdeckung der tatsächlichen Zielgruppe zu erreichen. Bei dem erfindungsgemäßen System wird dagegen automatisch nur genau die Zielgruppe angesprochen, die an dem jeweiligen Produkt Interesse hat.

## Patentansprüche

1. Verfahren zur Übertragung von standortspezifischen Informationen, wobei an unterschiedlichen Standorten jeweils Content-Geber (1) positioniert werden und in einem Content-Speicher (4) jedes Content-Gebers (1) für diesen Standort spezifische Informationen eingespeichert werden, wobei weiter jeder Content-Geber (1) in einem räumlich eng begrenzten Sendebereich (2) diese standortspezifischen Informationen aussendet, und wobei eine mobile Empfangseinheit (6) bei Eintritt in den Sendebereich (2) des Content-Gebers (1) die standortspezifischen Informationen empfängt und weiterverarbeitet und/oder zur Anzeige bringt,
**dadurch gekennzeichnet,**
**daß** die standortspezifischen Informationen vor deren Weiterverarbeitung und/oder Anzeige in Abhängigkeit von der Empfangseinheit (6) gefiltert werden.

2. Verfahren nach Anspruch 1, **dadurch gekennzeichnet, daß** der Content-Geber (1) ein Bereitschaftssignal aussendet und dieses Bereitschaftssignal von der Empfangseinheit (6) bei Eintritt in den Sendebereich (2) des Content-Gebers (1) empfangen wird und die Empfangseinheit (6) daraufhin ein Abfragesignal aussendet und der Content-Geber (1) nach Empfang dieses Abfragesignals die Informationen an die Empfangseinheit (6) sendet.

3. Verfahren nach Anspruch 1 oder 2, **dadurch gekennzeichnet, daß** die Empfangseinheit (6) zur Abfrage der standortspezifischen Informationen ein Berechtigungssignal aussendet, welches vor Aussendung der Informationen vom Content-Geber (1) geprüft wird.

4. Verfahren nach einem der Ansprüche 1 bis 3, **dadurch gekennzeichnet, daß** der Content-Geber (1) ein Inhaltsverzeichnis über die zur Verfügung stehenden standortspezifischen Informationen aussendet.

5. Verfahren nach einem der vorstehenden Ansprüche, **dadurch gekennzeichnet, daß** die Empfangseinheit (6) die empfangenen standortspezifischen Informationen in Abhängigkeit von in der Empfangseinheit (6) eingespeicherten Vorgaben filtert.

6. Verfahren nach einem der vorstehenden Ansprüche, **dadurch gekennzeichnet, daß** die standortspezifischen Informationen vom Content-Geber (1) kodiert ausgesendet und von der Empfangseinheit (6) mittels eines entsprechenden Schlüssels dekodiert werden.

7. Verfahren nach einem der vorstehenden Ansprüche, **dadurch gekennzeichnet, daß** als Empfangseinheit (6) ein mobiles Endgerät mit einer kurzreichweitigen drahtlosen Schnittstelle (10) verwendet wird.

8. Content-Geber (1) zur Durchführung eines Verfahrens nach einem der Ansprüche 1 bis 7, mit einem Content-Speicher (4), einem kurzreichweitigen Sender (3) zum Aussenden der standortspezifischen Informationen, Mitteln zur Aussendung eines Bereitschaftssignals, einem Empfangsteil zum Empfang eines Abfragesignals einer Empfangseinheit (6) und einer Einrichtung, welche bei Empfang eines Abfragesignals standortspezifische Informationen aus dem Content-Speicher (4) auswählt und aussendet,
**dadurch gekennzeichnet,**
**daß** die Einrichtung Filtermittel umfasst, welche die standortspezifischen Informationen vor deren Aussendung in Abhängigkeit von dem Abfragesignal filtern.

9. Content-Geber nach Anspruch 8, **gekennzeichnet durch** eine Prüfeinrichtung, welche vor Aussenden der standortspezifischen Informationen ein von der Empfangseinheit (6) ausgesendetes Berechtigungssignal prüft.

10. Content-Geber nach Anspruch 8 oder 9, **gekennzeichnet durch** einen Kodierer zum Kodieren der ausgesendeten standortspezifischen Informationen.

11. Content-Geber nach einem der Ansprüche 8 bis 10, **gekennzeichnet durch** eine netzunabhängige Spannungsversorgung.

12. Empfangseinheit (6) zur Durchführung eines Verfahrens nach einem der Ansprüche 1 bis 7, mit einer kurzreichweitigen Schnittstelle (10) zum Empfang der von einem Content-Geber (1) ausgesendeten Signale und einer Einrichtung (9) zur Weiterverarbeitung der empfangenen standortspezifischen Informationen und/oder einer Anzeigeeinrichtung (7) zur Anzeige der standortspezifischen Informationen
**dadurch gekennzeichnet,**
**daß** die Einrichtung (9) zur Weiterverarbeitung der empfangenen standortspezifischen Informationen eine Filtereinrichtung (9) aufweist, welche die empfangenen standortspezifischen Informationen filtert oder/und
**daß** die Empfangseinheit (6) Mittel zum Aussenden eines selektiven Abfragesignals an den Content-Geber (1) aufweist, nach dessen Maßgabe der Content-Geber (1) die standortspezifischen Informationen aussendet.

13. Empfangseinheit nach Anspruch 12, **gekennzeichnet durch** Mittel zur Aussendung eines Abfragesignals bei Empfang eines Bereitschaftssignals eines Content-Gebers (1).

14. Empfangseinheit nach Anspruch 12 oder 13, **gekennzeichnet durch** eine Eingabeeinrichtung (7) zur Eingabe von Filterdaten, anhand derer die empfangenen standortspezifischen Informationen in der Empfangseinheit (6) gefiltert werden und/oder das selektive Abfragesignal zur Aussendung an den Content-Geber (1) erzeugt wird.

15. Empfangseinheit nach einem der Ansprüche 12 bis 14,
**dadurch gekennzeichnet, daß** die Empfangseinheit (6) ein mobiles Endgerät ist.

16. Informationsübertragungssystem zur Durchführung eines Verfahrens zur Übertragung von standortspezifischen Informationen gemäß einem der Ansprüche 1 bis 7, mit an unterschiedlichen Standorten positionierten Content-Gebern (1) gemäß einem der Ansprüche 8 bis 11, welche jeweils in einem räumlich eng begrenzten, separaten Sendebereich (2) ihre standortspezifischen Informationen aussenden, und mit einer Empfangseinheit (6) gemäß einem der Ansprüche 12 bis 15, welche bei Eintritt in den Sendebereich (2) eines Content-Gebers (1) die gesendeten standortspezifischen Informationen dieses Content-Gebers (1) empfängt und weiterverarbeitet und/oder zur Anzeige bringt.

## Claims

1. Method for transmission of location-specific information, in which content transmitters (1) are in each case positioned at different locations and information which is specific for this location is stored in a content memory (4) for each content transmitter (1), in which, furthermore, each content transmitter (1) transmits this location-specific information in a spatially narrowly bounded transmission area (2), and in which, on entering the transmission area (2) of the content transmitter (1), a mobile receiving unit (6) receives the location-specific information, processes it further and/or causes it to be displayed,
**characterized in that** the location-specific information is filtered as a function of the receiving unit (6) before being processed further and/or displayed.

2. Method according to Claim 1, **characterized in that** the content transmitter (1) transmits a readiness signal, this readiness signal is received by the receiving unit (6) on entering the transmission area (2) of the content transmitter (1), the receiving unit (6) then transmits an inquiry signal and, after receiving this inquiry signal, the content transmitter (1) sends the information to the receiving unit (6).

3. Method according to Claim 1 or 2, **characterized in that**, in order to check the location-specific information, the receiving unit (6) transmits an authorization signal which is checked by the content transmitter (1) before transmission of the information.

4. Method according to one of Claims 1 to 3, **characterized in that** the content transmitter (1) transmits a contents list relating to the available location-specific information.

5. Method according to one of the preceding claims, **characterized in that** the receiving unit (6) filters the received location-specific information as a function of prerequisites stored in the receiving unit (6).

6. Method according to one of the preceding claims, **characterized in that** the location-specific information is transmitted in encoded form by the content transmitter (1) and is decoded by the receiving unit (6) by means of an appropriate key.

7. Method according to one of the preceding claims, **characterized in that** a mobile terminal with a short-range wire-free interface (10) is used as the receiving unit (6).

8. Content transmitter (1) for carrying out a method according to one of Claims 1 to 7, having a content memory (4), a short-range transmitter (3) for transmission of the location-specific information, means for transmission of a readiness signal, a receiving section for receiving an inquiry signal from a receiving unit (6), and a device which selects and transmits location-specific information from the content memory (4) on receiving an inquiry signal, **characterized in that** the device has filter means which filter the location-specific information as a function of the inquiry signal, before transmitting it.

9. Content transmitter according to Claim 8, **characterized by** a checking device, which checks an authorization signal (which is transmitted by the receiving unit (6)) before transmission of the location-specific information.

10. Content transmitter according to Claim 8 or 9, **characterized by** an encoder for encoding the transmitted location-specific information.

11. Content transmitter according to one of Claims 8 to 10, **characterized by** a voltage supply which is independent of the mains power supply system.

12. Receiving unit (6) for carrying out a method according to one of Claims 1 to 7, having a short-range interface (10) for reception of the signals which are transmitted by a content transmitter (1), and a device (9) for further processing of the received location-specific information, and/or having a display device (7) for displaying the location-specific information, **characterized in that** the device (9) for further processing of the received location-specific information has a filter device (9), which filters the received location-specific information and/or **in that** the receiving unit (6) has means for transmission of a selective inquiry signal to the content transmitter (1), on the basis of which the content transmitter (1) transmits the location-specific information.

13. Receiving unit according to Claim 12, **characterized by** means for transmission of an inquiry signal on receiving a readiness signal for a content transmitter (1).

14. Receiving unit according to Claim 12 or 13, **characterized by** an input device (7) for inputting filter data on the basis of which the received location-specific information is filtered in the receiving unit (6), and/or the selective inquiry signal is produced for transmission to the content transmitter (1).

15. Receiving unit according to one of Claims 12 to 14, **characterized in that** the receiving unit (6) is a mobile terminal.

16. Information transmission system for carrying out a method for transmission of location-specific information according to one of Claims 1 to 7, having content transmitters (1) according to one of Claims 8 to 11, which content transmitters (1) are positioned at different locations and each transmit their location-specific information in a spatially narrowly bounded, separate transmission area (2), and having a receiving unit (6) according to one of Claims 12 to 15 which, on entering the transmission area (2) of a content transmitter (1), receives the transmitted location-specific information from this content transmitter (1), further-processes it and/or causes it to be displayed.

## Revendications

1. Procédé de transmission d'informations spécifiques d'emplacements, des transmetteurs de contenu (1) étant positionnés à différents emplacements, des informations spécifiques à cet emplacement étant mémorisées dans une mémoire de contenu (4) de chaque transmetteur de contenu (1), chaque transmetteur de contenu (1) émettant par ailleurs ces informations spécifiques d'emplacements dans une zone d'émission (2) étroitement limitée dans l'espace, et une unité de réception (6) mobile recevant les informations spécifiques d'emplacements lors de leur entrée dans la zone d'émission (2) du transmetteur de contenu (1) et assurant leur traitement ultérieur et/ou les affichant, **caractérisé en ce que** les informations spécifiques d'emplacement sont filtrées avant leur traitement ultérieur et/ou leur affichage en fonction de l'unité de réception (6).

2. Procédé selon la revendication 1, **caractérisé en ce que** l'émetteur de contenu (1) émet un signal d'invitation à transmettre et **en ce que** ce signal d'invitation à transmettre est reçu par l'unité de réception (6) lorsqu'il pénètre dans la zone d'émission (2) du transmetteur de contenu (1) et **en ce que** l'unité de réception (6) émet ensuite un signal d'interrogation et **en ce que** le transmetteur de contenu (1) envoie les informations à l'unité de réception après réception de ce signal d'interrogation.

3. Procédé selon la revendication 1 ou 2, **caractérisé en ce que** l'unité de réception (6) émet un signal d'autorisation pour l'interrogation des informations spécifiques d'emplacements, lequel signal est vérifié par le transmetteur de contenu (1) avant l'émission des informations.

4. Procédé selon l'une des revendications 1 à 3, **caractérisé en ce que** le transmetteur de contenu (1) émet un répertoire sur les informations spécifiques d'emplacements disponibles.

5. Procédé selon l'une des revendications précédentes, **caractérisé en ce que** l'unité de réception (6) filtre les informations spécifiques d'emplacements reçues en fonction des consignes mémorisées dans l'unité de réception (6).

6. Procédé selon l'une des revendications précédentes, **caractérisé en ce que** les informations spécifiques d'emplacements sont émises codées par le transmetteur de contenu (1) et décodées par l'unité de réception (6) au moyen d'un code correspondant.

7. Procédé selon l'une des revendications précédentes, **caractérisé en ce que** l'unité de réception (6) utilise un terminal mobile doté d'une interface (10) sans fil de faible portée.

8. Transmetteur de contenu (1) pour la mise en oeuvre d'un procédé selon l'une des revendications 1 à 7, doté d'un transmetteur de contenu (4), d'un émetteur de faible portée (3) pour l'émission des informations spécifiques d'emplacements, de moyens d'émissions d'un signal d'invitation à transmettre, d'une partie réceptrice pour la réception d'un signal d'interrogation d'une unité de réception (6) et d'un dispositif qui sélectionne et émet des informations spécifiques d'emplacements de la mémoire de contenu (4) à la réception d'un signal d'interrogation, **caractérisé en ce que** le dispositif comprend des moyens de filtrage qui filtrent les informations spécifiques d'emplacements avant leur émission en fonction du signal d'interrogation.

9. Transmetteur de contenu selon la revendication 8, **caractérisé par** un dispositif de contrôle qui contrôle avant l'émission des informations spécifiques d'emplacements un signal d'autorisation émis par l'unité de réception (6).

10. Transmetteur de contenu selon la revendication 8 ou 9, **caractérisé par** un codeur pour le codage des informations spécifiques d'emplacements émises.

11. Transmetteur de contenu selon l'une des revendications 8 à 10, **caractérisé par** une alimentation en tension indépendante du réseau.

12. Unité de réception (6) pour la mise en oeuvre d'un procédé selon l'une des revendications 1 à 7, dotée d'une interface de faible portée (10) pour la réception des signaux émis par le transmetteur de contenu (1) et d'un dispositif (9) pour le traitement ultérieur des informations d'emplacements spécifiques reçues et/ou d'un dispositif d'affichage (7) pour l'affichage des informations spécifiques d'emplacements, **caractérisé en ce que** le dispositif (9) pour le traitement ultérieur des informations d'emplacements spécifiques reçues comporte un dispositif de filtrage (9), qui filtre les informations spécifiques d'emplacements reçues et/ou **en ce que** l'unité de réception (6) comporte des moyens pour l'émission d'un signal d'interrogation sélectif au transmetteur de contenu (1), à l'aide desquels le transmetteur de contenu (1) émet les informations spécifiques d'emplacements.

13. Unité de réception selon la revendication 12, **caractérisée par** des moyens d'émission d'un signal d'interrogation à la réception d'un signal d'invitation à transmettre d'un transmetteur de contenu (1)

14. Unité de réception selon la revendication 12 ou 13, **caractérisée par** un dispositif d'entrée (7) pour l'entrée de données de filtrage, à l'aide desquelles les informations spécifiques d'emplacements reçues dans l'unité de réception (6) sont filtrées et/ou le signal d'interrogation sélectif est généré pour être envoyé au transmetteur de contenu (1).

15. Unité de réception selon l'une des revendications 12 à 14, **caractérisée en ce que** l'unité de réception (6) est un terminal mobile.

16. Système de transmission d'informations pour la mise en oeuvre d'un procédé de transmission d'informations d'emplacements spécifiques selon l'une des revendications 1 à 7, doté de transmetteurs de contenu (1) positionnés à différents emplacements selon l'une des revendications 8 à 11, lesquels émettent leurs informations spécifiques d'emplacements dans une zone d'émission (2) séparée et étroitement limitée dans l'espace, et d'une unité de réception (6) selon l'une des revendications 12 à 15, qui reçoit et assure le traitement ultérieur et/ou affiche, à l'entrée dans la zone d'émission (2) d'un transmetteur de contenu (1), les informations spécifiques d'emplacements envoyées de ce transmetteur de contenu (1).
